# EUROPÄISCHE PATENTSCHRIFT

(11) **EP 0 298 512 B1**
(45) Veröffentlichungstag und Bekanntmachung des Hinweises auf die Patenterteilung: **10.03.1993**
(21) Anmeldenummer: 88110971.4
(22) Anmeldetag: 08.07.1988
(51) Int. Cl.: G01N 33/48, G01N 1/28, B01L 3/14, B01D 35/00

(54) **Filtrationseinheit mit Druckausgleich**
Filter unit with pressure equalisation
Unité de filtration avec égalisation de pression

(30) Priorität: 08.07.1987 DE 3722563
(43) Veröffentlichungstag der Anmeldung: 11.01.1989
(73) Patentinhaber: Szabados, Andreas, Dr.med., D-82031 Grünwald (DE)
(72) Erfinder: Szabados, Andreas, Dr.med., D-82031 Grünwald (DE)
(74) Vertreter: Prechtel, Jörg, Dipl.-Phys. Dr.

(56) Entgegenhaltungen:
- DE-A- 3 427 114
- US-A- 3 300 051
- US-A- 3 608 736
- US-A- 4 439 319

## Beschreibung

Die Erfindung betrifft eine Filtrationseinheit, insbesondere für medizinische, mikrobiologische, biochemische, immunologische oder molekularbiologische Proben, mit einem Probenaufnahmegefäß, einem Filtratgefäß und mit einem zwischen Probenaufnahmegefäß und Filtratgefäß angeordneten, ein Filterelement aufweisenden Filterkörper, wobei zur Vermeidung von Flüssigkeitsaustritt bei der Filtration das Filtratgefäß über das Filterelement mit dem Probenaufnahmegefäß verbunden, jedoch im übrigen nach außen hin abgeschlossen ist und ggf. auch das Probenaufnahmegefäß nach außen hin abgeschlossen ist.

Eine derartige Filtrationseinheit ist bekannt (Figuren 3 - 8 der DE-A-34 27 114). Die durch diese bekannte Anordnung ermöglichte Filtration im geschlossenen System bietet den großen Vorteil, daß einerseits eine Kontamination der Umwelt sowohl durch das Filtrat als auch durch die Filtrationsflüssigkeit und die auf dem Filterelement abgelagerten abfiltrierten Teilchen vermieden wird, einschließlich möglicher Kontamination und Geruchsbelästigung der Umgebung durch entweichende Gase; andererseits ist auch eine Beeinträchtigung von Filtrationsflüssigkeit und Filtrat durch Verunreinigungen von außen und vor allem durch Zutritt von Luftsauerstoff von vorneherein vermieden. Die Filtration geht bei der bekannten Anordnung jedoch in vielen Fällen recht langsam vonstatten, da der Filtratgehäuseinnenraum ausschließlich über das von der Filtrationsflüssigkeit auf seiner Oberseite beaufschlagte Filterelement mit dem Probenaufnahmegefäß-Innenraum verbunden ist und ansonsten nach außen hin abgeschlossen ist. Während der Filtration füllt sich der Filtratgefäß-Innenraum zunehmend mit Filtrat. Die hierdurch verdrängte, ursprünglich den Filtratgehäuse-Innenraum vollständig ausfüllende Gasmenge gerät unter die Filtration hemmenden Überdruck mit dem einzig möglichen Druckausgleich über das Filterelement und die auf dem Filterelement ruhende Filtrationsflüssigkeitssäule.

Die US-A-33 00 051 zeigt eine Filtrationseinheit, bei der sowohl das Probenaufnahmegefäß als auch das Filtratgefäß mit einer in die Umgebung mündenden Belüftungsöffnung ausgebildet ist. Ein Flüssigkeitsaustritt aus dem Filtratgefäß ist daher nicht ausgeschlossen. Auch kann das Filtrat durch Verunreinigung von außen und vor allem durch Zutritt von Luftsauerstoff beeinträchtigt werden.

Die Aufgabe der Erfindung liegt darin, bei einer Filtrationseinheit der eingangs genannten Art, bei welcher zumindest das Filtratgefäß nach außen hin vollständig abgeschlossen ist, für eine Beschleunigung der Filtration zu sorgen durch Erleichterung des Druckausgleichs.

Diese Aufgabe wird gelöst durch wenigstens einen Druckausgleichskanal, welcher eine erste Mündungsstelle im Filtratgefäß-Innenraum oberhalb des maximalen Filtratpegels mit einer zweiten Mündungsstelle im Probenaufnahmegefäß-Innenraum oberhalb des maximalen Filtrationsflüssigkeitspegels unter Umgehung der Filtrationsflüssigkeit verbindet. Der Druckausgleichskanal sorgt unmittelbar für den gewünschten Druckausgleich, wobei das Filtratgefäß und bei Bedarf auch das Probenaufnahmegefäß nach außen hin mehr oder weniger hermetisch abgeschlossen sein können.

Um bei einfacher Herstellbarkeit das Eindringen von Filtrat in den jeweiligen Druckausgleichskanal zumindest zu erschweren, wird vorgeschlagen, daß der Druckausgleichskanal von einem von der Filtrationsflüssigkeit nicht bedeckten Abschnitt des Filterelements durchsetzt wird. Diese Anordnung ist auch herstellungstechnisch besonders günstig, da gesonderte Aussparungen im Filterelement für den Druckausgleichskanal vermieden werden. Bei einem ein Stützsieb für eine Filterscheibe umfassenden Filterelement wird der Druckausgleichskanal lediglich vom Stützsieb durchsetzt.

Eine herstellungstechnisch besonders günstige Ausführungsform der Erfindung ist dadurch gekennzeichnet, daß die Seitenwand des Probenaufnahmegefäßes doppelwandig ausgebildet ist und daß der Doppelwand-Zwischenraum einen Abschnitt des wenigstens einen Druckausgleichskanals bildet. Diese Ausführungsform ist auch mechanisch besonders robust, was vor allem für die Verwendung der Filtrationseinheit in Verbindung mit einer Ultra-Zentrifuge von Bedeutung ist.

Alternativ hierzu kann auch die Seitenwand des Probenaufnahmegefäßes mit wenigstens einer axial verlaufenden Bohrung ausgebildet sein, die einen Abschnitt des Druckausgleichskanals bildet. Herstellungstechnisch besonders günstig ist es, wenn das Probenaufnahmegefäß mit einem die wenigstens eine axiale Bohrung aufweisenden Einsatzteil versehen ist. Dieses Einsatzteil kann dann mit axialen Durchgangsbohrungen versehen sein.

Gemäß der genannten DE-A- 34 27 114 kann der Filterhörper als gesondertes Teil ausgebildet sein in Form eines Zylinderringes, in welchen von beiden Seiten einerseits das Probenaufnahmegefäß und andererseits das Filtratgefäß mit der jeweiligen Gefäßöffnung voraus einzuschrauben sind. Filtratgefäß und Probenaufnahmegefäß sind dann ausschließlich miteinander verbunden und dementsprechend nach außen hin abgeschlossen. Hiervon abweichend kann das Probenaufnahmegefäß auch mit dem Filterkörper einstückig ausgebildet sein, wobei dann lediglich das Filtratgefäß an den Filterkörper anzuschrauben ist. Das Probenaufnahmegefäß ist dann an seinem vom Filtratgefäß abgelegenen Ende offen, um das Eingießen von Filtratflüssigkeit zu ermöglichen. Nach diesem Eingießen kann dann die Öffnung durch eine Kappe oder Deckel verschlossen werden. In diesem Fall wird vorgeschlagen, daß die zweite Mündungsstelle im Bereich zwischen Kappe oder Deckel und der Seitenwand des Probenaufnahmegefäßes angeordnet ist. Hierzu kann man bei doppelwandiger Ausbildung das innere Wandteil dementsprechend an seinem oberen Ende verkürzen. In einer bevorzugten Alternative ist die Kappe mit einer Ausnehmung im Bereich des kappenseitigen Randes des inneren Wandteils der doppelwandigen Seitenwand bzw. des kappenseitigen Randes des Einsatzteils versehen. Es ergibt sich wiederum minimaler Herstellungsaufwand bei maximalem Abstand der zweiten Mündungsstelle vom Filtrationsflüssigkeitspegel.

Die Erfindung wird im folgenden an bevorzugten Ausführungsbeispielen anhand der Zeichnung erläutert.

Es zeigt:
- Fig. 1: eine Seitenansicht im Schnitt nach Linie I-I in
- Fig. 2: einer ersten Ausführungsform einer erfindungsgemäßen Filtrationseinheit; Fig. 2 einen Horizontalschnitt der Anordnung in Fig. 1 nach Linie II-II;
- Fig. 3: einen Horizontalschnitt entsprechend Fig. 2 einer zweiten Ausführungsform; und
- Fig. 4: eine seitliche Schnittansicht einer nicht beanspruchten Ausführungsform (nur zu Illustrationszwecken).

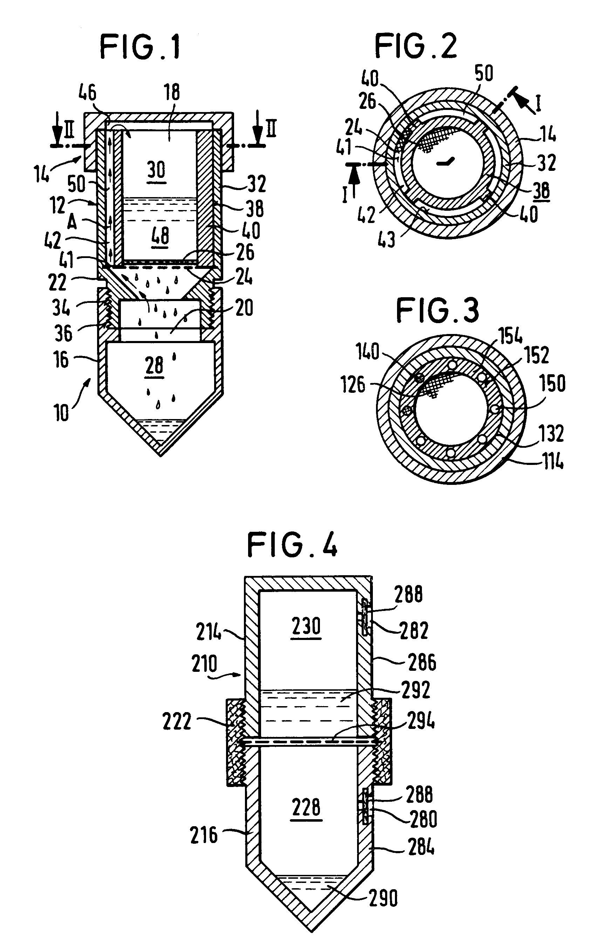

Die in den Fig. 1 und 2 vereinfacht dargestellte Filtrationseinheit 10 besteht aus drei gesondert handhabbaren Teilen, nämlich einem Probenaufnahmegefäß 12 mit Gefäßöffnung 18, die mittels einer Kappe 14 verschließbar ist und welches auf die Gefäßöffnung 20 eines Filtratgefäßes 16 aufsetzbar (im dargestellten Ausführungsbeispiel aufschraubbar) ist. Das Probenaufnahmegefäß ist einstückig mit einem Filterkörper 22 ausgebildet, welcher, in Form eines Hohlzylinderrings, als Träger für ein Filterelement dient. Im dargestellten Ausführungsbeispiel besteht das Filterelement aus einem den Innenquerschnitt des Filterkörpers vollständig abdeckenden, in radialer Ebene angeordneten Stützsieb 24 sowie einer auf dem Stützsieb ruhenden kreisförmigen Filterscheibe 26. Alternativ hierzu kann ähnlich den Fig. 3 bis 7 der DE-OS 34 27 114 der Filterkörper auch als gesondert handhabbares Teil ausgebildet sein, an dessen oberes Axialende das Probenaufnahmegefäß mit seiner Gefäßöffnung voraus anbringbar, insbesondere anschraubbar ist.

Die Filtrationseinheit 10 ermöglicht eine Filtration im geschlossenen System, da die (einzige) Gefäßöffnung 20 des Filtratgefäßes durch das mit dem Filtratgefäß verschraubte Probenaufnahmegefäß abgeschlossen ist mit Anschluß des Gefäßinnenraums 28 des Filtratgefäßes 16 über den beschriebenen Filterkörper 22 an den Gefäßinnenraum 30 des Probenaufnahmegefäßes; die Gefäßöffnung 18 des Probenaufnahmegefäßes ist wiederum mit Hilfe der Kappe 14 verschließbar. Während der Filtration in diesem geschlossenen System verdrängt die Filtratflüssigkeit im Filtratgefäß zunehmend die ursprünglich den Innenraum 28 vollständig ausfüllende Luft- bzw. Gasmenge. Eine entsprechende Gasdruckerhöhung ist die Folge. Dieser entspricht einer Gasdruckerniedrigung im Gefäßinnenraum 30 des Probenaufnahmegefäßes 12. Der Gasdruckausgleich durch den Durchtritt von Gas durch die Filterscheibe 26 ist erschwert und, zumindest nach Ablagerung einer feinteiligen Schicht abzufiltrierender Teilchen während der Filtration auf der Filterscheibe 26, derart erschwert, daß die Filtration außerordentlich verlangsamt, wenn nicht sogar unterbrochen wird. Um den Druckausgleich innerhalb des geschlossenen Systems ungehindert zu ermöglichen, sind Druckausgleichskanäle vorgesehen, die die Filtrationsflüssigkeit im Probenaufnahmegefäß 12 umgehen. Hierzu ist das Probenaufnahmegefäß 12 mit einer doppelwandigen Seitenwand ausgebildet. Das äußere Wandteil 32 in Form eines Hohlzylinders geht unmittelbar über in den ebenfalls hohlzylindrischen Filterkörper 22, an welchem ein Außengewinde 34 zum Aufschrauben eines entsprechenden Innengewindes 36 am oberen Ende des Filtratgefäßes 16 aufschraubbar ist. Das zum äußeren Wandteil konzentrische innere Wandteil 38 wird über auf seinen Außenumfang verteilte Stege 40 in gleichmäßigem Abstand zur Innenumfangsfläche 43 des äußeren Wandteils 32 gehalten. Diese Stege 40 sind im dargestellten Ausführungsbeispiel mit dem inneren Wandteil 38 ausgebildet; sie können jedoch auch einstückig mit dem äußeren Wandteil 32 ausgebildet sein oder gesonderte Teile bilden. Zwischen beiden Wandteilen 32,38 befindet sich also ein Zwischenraum 42.

Wie Fig. 1 zeigt, sitzt das innere Wandteil 38 auf dem Stützsieb 24 auf. Das Stützsieb 24 ist jedoch bis zum äußeren Wandteil 14 weitergeführt und in den dortigen Übergangsbereich zwischen Wandteil 14 und ringförmigem Filterkörper 22 eingebettet oder eingegossen.

Bei gesonderter Ausbildung des Filterkörpers würde dementsprechend das äußere Wandteil mit dem ringförmigen Filterkörper abdichtend verbunden werden mit Auflage des unteren Randes des inneren Wandteils auf dem Stützsieb. Auf jeden Fall wird der zwischen den Wandteilen 32 und 38 gebildete Ringraum nach unten hin durch einen ebenen äußeren Kreisringabschnitt 41 des Stützsiebes 24 begrenzt.

Über diesen Siebabschnitt 41 ist der Doppelwand-Zwischenraum 42 mit dem Innenraum 28 des Filtratgefäßes 16 verbunden. Eine entsprechende Verbindung besteht auch zum Innenraum 30 des Probenaufnahmegefäßes 12 und zwar vorzugsweise mit Lufteintritt in den Innenraum 30 im Bereich zwischen Kappe 14 und oberen Rand des Gefäßes 12. Dies kann durch entsprechende Ausnehmungen oder Bohrungen oder Verkürzung des inneren Wandteils 38 geschehen oder, wie dargestellt, durch eine entsprechende Aussparung 46 in der Kappe 14, die bei aufgesetzter, insbesondere aufgeschraubter Kappe 14, eine Verbindung zwischen Zwischenraum 42 und Innenraum 30 herstellt.

Die Filtrationseinheit 10 gemäß Fig. 1 und 2 kann in der folgenden Weise gehandhabt werden:
In das mit dem Filtratgefäß 16 verbundene Probenaufnahmegefäß 12 wird die Filtrationsflüssigkeit 48 eingefüllt. Anschließend wird die Kappe 14 aufgesetzt und die Einheit 10 in einen entsprechenden Ständer mit der Kappe 14 nach oben eingesetzt, so daß die Filtration unter der Einwirkung der Schwerkraft erfolgt. Zur Beschleunigung der Filtration kann auch die Einheit 10 in eine Ultra-Zentrifuge eingesetzt werden. Der bei dem Übergang der Flüssigkeit vom Innenraum 30 über die Filterscheibe 26 in den Innenraum 28 notwendig werdende Gasdruckausgleich erfolgt über den Zwischenraum 42, wie durch Strömungspfeile A in Fig. 1 angedeutet ist. Die zwischen den axial verlaufenden Stegen 40 gebildeten, in Achsrichtung verlaufenden Kanäle 50 verbinden somit die Räume 28 und 30 unter Umgehung der Filtrationsflüssigkeit 48 im Innenraum des inneren Wandteils 38. Vor dem Eintritt in den Zwischenraum 42 muß das Gas durch den kreisringförmigen Abschnitt 40 des Stützsiebs 24 treten, was das Eindringen dieser Flüssigkeit in den im allgemeinen ziemlich engen Zwischenraum 42 verhindert. Eine Reduzierung des freien Gasdurchgangsquerschnitt durch Flüssigkeit im Zwischenraum 42 oder gar ein Zusetzen der Kanäle 50 wird hierdurch ausgeschlossen. Umgekehrt wird auch der unerwünschte Zutritt von unfiltrierter Filtrationsflüssigkeit bei unsachgemäßer Handhabung der Filtrationseinheit in Gegenrichtung durch die Kanäle 50 zum Filtrationsgefäßinnenraum 28 mit entsprechender Beeinträchtigung des Filtrats verhindert.

Während in der Ausführungsform gemäß Fig. 1 und 2 die Druckausgleichskanäle 50 vom Zwischenraum in der doppelwandigen Gefäßwand des Probenaufnahmegefäßes gebildet werden, erhält man in der in Fig. 3 dargestellten alternativen Ausführungsform die Druckausgleichskanäle 150 durch Vorsehen von achsparallel verlaufenden Bohrungen 152 in der Gefäßwand oder in einem in das Gefäß einzusetzenden Einsatzteil 154. Diese Bohrungen 152 können beispielsweise bereits bei der Herstellung des Einsatzteils 154 eingeformt sein oder nachträglich gebohrt werden. Der Vorteil eines gesonderten Einsatzteils 154 liegt vor allem darin, daß die unteren Enden der Bohrungen 152 wiederum ohne weiteres durch einen äußeren ebenen Kreisringabschnitt 140 des in das äußere Wandteil 132 eingeformten Stützsiebes abgeschlossen werden können. Die Filterscheibe 126 ist wiederum mit ihrem Außendurchmesser an den Innendurchmesser des Einsatzteils 154 angepaßt und auf das Stützsieb abgelegt. Die Filtration im geschlossenen System mit aufgeschraubter Kappe 114 geht wiederum entsprechend dem ersten Ausführungsbeispiel gemäß Fig. 1 und 2 vonstatten. Nach der Filtration kann das Filtrationsgefäß 16 mit einem gesonderten Deckel abgeschlossen werden ebenso wie das untere Ende des Probenaufnahmegefäßes durch Aufschrauben einer Kappe auf das Außengewinde 34.

Bei der in Fig. 4 dargestellten, mit 210 bezeichneten nicht beanspruchten Ausführungsform sind anstelle von die beiden Gefäßinnenräume 230 und 228 miteinander verbindenden Druckausgleichskanälen sowohl im Filtratgefäß 216 als auch im Probenaufnahmegefäß 214 Durchgangsöffnungen 280 und 282 jeweils in der Seitenwand 284 des Filtratgefäßes bzw. der Seitenwand 286 des Probenaufnahmegefäßes 216 vorgesehen. Jede Durchgangsöffnung ist mit einem scheibenförmigen Filterteil 288 verschlossen, welches im wesentlichen nur gasdurchlässig ist, also undurchlässig für die Filtratflüssigkeit 290 bzw. die Filtrationsflüssigkeit 292 oberhalb des Filterelementes 294. Beide Durchgangsöffnungen 280 und 282 sind möglichst weit nach oben hin gelegt, also derart, daß diese weder bei maximalem Pegel der Filtrationsflüssigkeit 292 noch der Filtratflüssigkeit 290 von der jeweiligen Flüssigkeit erreicht werden. Auf diese Weise ergibt sich wiederum der gewünschte Druckausgleich während der Filtration unter Beibehaltung des geschlossenen Systems.

Entsprechend den Fig. 3 bis 8 der DE-OS 34 27 114 ist bei der Ausführungsform gemäß Fig. 4 der Filterkörper 222 gesondert ausgebildet in Form eines das Siebelement 294 im Bereich seiner axialen Längenmitte aufweisenden hohlzylindrischen Rings, in dessen oberes Ende das Probenaufnahmegefäß 214 mit seiner Gefäßöffnung voraus einschraubbar ist und dementsprechend das Filtratgefäß 216 von unten her. Alternativ hierzu kann auch bei der Ausführungsform gemäß Fig. 4 eine einstückige Ausbildung des Filterkörpers mit dem Probenaufnahmegefäß analog Fig. 1 vorgesehen sein.

## Patentansprüche

1. Filtrationseinheit (10), insbesondere für medizinische, mikrobiologische, biochemische, immunologische oder molekularbiologische Proben, mit einem Probenaufnahmegefäß (12), einem Filtratgefäß (16) und einem zwischen Probenaufnahmegefäß (12) und Filtratgefäß (16) angeordneten, ein Filterelement aufweisenden Filterkörper (22), wobei zur Vermeidung von Flüssigkeitsaustritt das Filtratgefäß (16) über das Filterelement mit dem Probenaufnahmegefäß (12) verbunden, jedoch im übrigen nach außen hin abgeschlossen ist und ggf. auch das Probenaufnahmegefäß (12) nach außen hin abgeschlossen ist, **gekennzeichnet durch** wenigstens einen Druckausgleichskanal (50;150), welcher eine erste Mündungsstelle im Filtratgefäß-Innenraum (28) oberhalb des maximalen Filtratpegels mit einer zweiten Mündungsstelle im Probenaufnahmegefäß-Innenraum (30) oberhalb des maximalen Filtrationsflüssigkeitspegels unter Umgehung der Filtrationsflüssigkeit verbindet.

2. Filtrationseinheit nach Anspruch 1,
dadurch **gekennzeichnet,**
daß der Druckausgleichskanal (50;150) von einem von der Filtrationsflüssigkeit (48) nicht bedeckten Abschnitt (41;140) des Filterelements durchsetzt wird.

3. Filtrationseinheit nach Anspruch 2,
dadurch **gekennzeichnet,**
daß bei einem ein Stützsieb (24) für eine Filterscheibe (26;126) umfassenden Filterelement der Druckausgleichskanal (50;150) lediglich vom Stützsieb (24) durchsetzt wird.

4. Filtrationseinheit nach einem der vorhergehenden Ansprüche,
dadurch **gekennzeichnet,**
daß die Seitenwand des Probenaufnahmegefäßes (12) doppelwandig ausgebildet ist, und daß der Doppelwand-Zwischenraum (42) einen Abschnitt des wenigstens einen Druckausgleichskanals (50) bildet.

5. Filtrationseinheit nach einem der Ansprüche 1 bis 3,
dadurch **gekennzeichnet,**
daß die Seitenwand des Probenaufnahmegefäßes (114) mit wenigstens einer axial verlaufenden Bohrung (152) ausgebildet ist, die einen Abschnitt des Druckausgleichskanals (150) bildet.

6. Filtrationseinheit nach Anspruch 5,
dadurch **gekennzeichnet,**
daß das Probenaufnahmegefäß (114) mit einem wenigstens eine axiale Bohrung aufweisenden Einsatzteil (154) versehen ist.

7. Filtrationseinheit nach einem der vorhergehenden Ansprüche,
dadurch **gekennzeichnet,**
daß die zweite Mündungsstelle im Bereich zwischen einer das vom Filtratgefäß (16) entferntere offene Ende des Probenaufnahmegefäßes (12) abschließenden Kappe (14) oder Deckel und der Seitenwand des Probenaufnahmegefäßes (12) angeordnet ist.

8. Filtrationseinheit nach Anspruch 7,
dadurch **gekennzeichnet,**
daß die Kappe (14) mit einer Ausnehmung (46) im Bereich des kappenseitigen Randes des inneren Wandteils (38) der doppelwandigen Seitenwand bzw. des kappenseitigen Randes des Einsatzteils (154) versehen ist.

9. Filtrationseinheit nach einem der vorhergehenden Ansprüche,
dadurch **gekennzeichnet,**
daß das Probenaufnahmegefäß (12) mit dem Filterkörper (22) einstückig ausgebildet ist.

## Claims

1. A filtration unit (10) particularly for medical, micro-biological, biochemical, immunological or molecular-biological samples, with a sample receiving vessel (12), a filtrate vessel (16) and a filter body (22) comprising a filter element and disposed between the sample receiving vessel (12) and the filtrate vessel (16), whereby to avoid the emergence of liquid, the filtrate vessel (16) is connected via the filter element to the specimen receiving vessel (12) but is otherwise sealed to the outside, the specimen receiving vessel (16) possibly also being sealed with respect to the outside, characterised by at least one pressure equalising passage (50; 150) which connects a first orifice in the filtrate vessel interior (28) above the maximum level of filtrate to a second orifice in the sample receiving vessel interior (30) above the maximum level of filtration fluid, and by-passing the filtration fluid.

2. A filtration unit according to claim 1, characterised in that the pressure equalising passage (50; 150) is traversed by a portion (41; 140) of the filter element which is not covered by the filtration liquid (48).

3. A filtration unit according to claim 2, characterised in that in the case of a filter element comprising a supporting sieve (24) for a filter disc (26; 126), the pressure equalising passage (50; 150) is only traversed by the supporting sieve (24).

4. A filtration unit according to one of the preceding claims, characterised in that the side wall of the sample receiving vessel (12) is double-walled and in that the double-walled intermediate space (42) forms a portion of the at least one pressure equalising passage (50).

5. A filtration unit according to one of claims 1 to 3, characterised in that the side wall of the sample receiving vessel (114) is constructed with at least one axially extending bore (152) which forms a portion of the pressure equalising passage (15).

6. A filtration unit according to claim 5, characterised in that the sample receiving vessel (114) is provided with an insert part (154) comprising at least one axial bore.

7. A filtration unit according to one of the preceding claims, characterised in that the second orifice is disposed in the region between the side wall of the sample receiving vessel (12) and a cap (14) or cover which closes off that open end of the sample receiving vessel (12) which is more remote from the filtrate vessel (16).

8. A filtration unit according to claim 7, characterised in that the cap (14) is provided with a recess (46) in the region of that edge of the inner wall part (38) of the double-walled side wall or that edge of the insert part (154) which is towards the cap.

9. A filtration unit according to one of the preceding claims, characterised in that the sample receiving vessel (12) is constructed in one piece with the filter body (22).

## Revendications

1. Unité de filtration (10), en particulier pour échantillons médicaux, microbiologiques, biochimiques, immunologiques ou de biologie moléculaire, comportant un récipient de rétention d'échantillon (12), un récipient à filtrat (16) et un corps filtrant (22), disposé entre le récipient de rétention d'échantillon (12) et le récipient à filtrat (16) et présentant un élément filtrant, dans laquelle, pour éviter toute sortie de liquide, le récipient à filtrat (16) est relié au récipient de rétention d'échantillon (12) par l'intermédiaire de l'élément filtrant, mais en étant par ailleurs hermétique vis-à-vis de l'extérieur et, le cas échéant, le récipient de rétention d'échantillon (12) étant étanche vis-à-vis de l'extérieur, caractérisée par au moins un canal d'équilibrage de pression (50;150), assurant la liaison entre un premier point d'embouchure situé dans l'enceinte intérieure de récipient de filtrat (28), au-dessus du niveau maximal de filtrat, et un deuxième point d'embouchure situé dans l'enceinte intérieure du récipient de rétention d'échantillon (30), au-dessus du niveau maximal de liquide de filtration, tout en étant baigné par le liquide de filtration.

2. Unité de filtration selon la revendication 1, caractérisée en ce que le canal d'équilibrage de pression (50;150) est traversé par un tronçon (41;140) d'élément filtrant non recouvert par le liquide de filtration (48).

3. Unité de filtration selon la revendication 2, caractérisée en ce que, dans le cas d'un élément filtrant comprenant un tamis de soutien (24) pour un disque filtrant (26;126), le canal d'équilibrage de pression (50;150) est seulement traversé par le tamis de soutien (24).

4. Unité de filtration selon l'une des revendications précédentes, caractérisée en ce que la paroi latérale du récipient de rétention d'échantillon (12) est à double paroi et en ce que l'enceinte intermédiaire de la double paroi (42) forme une partie du canal d'équilibrage de pression (50), au nombre d'au moins un.

5. Unité de filtration selon l'une des revendications 1 à 3, caractérisée en ce que la paroi latérale du récipient de rétention d'échantillon (114) est pourvue d'au moins un trou axial (152), formant un tronçon du canal d'équilibrage de pression (150).

6. Unité de filtration selon la revendication 5, caractérisée en ce que le récipient de rétention d'échantillon (114) est pourvu d'une partie de garnissage (154) présentant au moins un trou axial.

7. Unité de filtration selon l'une des revendications précédentes, caractérisée en ce que le deuxième point d'embouchure est disposé dans la zone située entre un capuchon (14) ou couvercle, délimitant l'extrémité ouverte, éloignée du récipient de filtrat (16), du récipient de rétention d'échantillon (12) et la paroi latérale du récipient de rétention d'échantillon (12).

8. Unité de filtration selon la revendication 7, caractérisée en ce que le capuchon (14) est pourvu d'un évidement (46) ménagé dans la zone de la bordure de côté capuchon de la partie de paroi intérieure (38) de la paroi latérale à double paroi, ou bien de la bordure de côté de capuchon de la partie de garnissage (154).

9. Unité de filtration selon l'une des revendications précédentes, caractérisée en ce que le récipient de rétention d'échantillon (12) est réalisé d'un seul tenant avec le corps filtrant (22).
